(19) Europäisches Patentamt
European Patent Office
Office européen des brevets

(11) **EP 1 785 072 A1**

(12) **EUROPÄISCHE PATENTANMELDUNG**

(43) Veröffentlichungstag:
**16.05.2007 Patentblatt 2007/20**

(51) Int Cl.:
*A47C 27/20* *(2006.01)*  *A47C 27/06* *(2006.01)*
*A47C 27/14* *(2006.01)*

(21) Anmeldenummer: **06010984.0**

(22) Anmeldetag: **29.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **11.11.2005 DE 202005017782 U**

(71) Anmelder: **Rummel-Matratzen GmbH & Co. KG
91413 Neustadt a.d. Aisch (DE)**

(72) Erfinder: **Richter, Dietrich
91413 Neustadt a.d. Aisch (DE)**

(74) Vertreter: **Mielke, Klaus
Patentanwalt,
Lohmühlenweg 24
91413 Neustadt a.d. Aisch (DE)**

(54) **Federelement in Polsterplatten von Matratzenkernen**

(57) Die Erfindung betrifft ein Federelement aus Federsegmenten (400). Dabei weist jedes Federsegment erste und zweite annähernd parallele Auflageschenkel (40,41) auf, die über erste und zweite Paare an seitlichen Federschenkeln (43,44; 47,48) im Querschnitt annähernd wabenartig verbunden sind. Die Federsegmente (400) sind hintereinander liegend angeordnet und ergeben eine Spirale mit annähernd wabenartigem Querschnitt. Das Federelement weist den Vorteil auf, dass von außen eingebrachte Druckkräfte im wesentlichen von den unmittelbar darunter liegenden Federsegmenten des spiralförmigen Federelements aufgenommen werden und keine Übertragung von Druckkräften innerhalb der Spirale auf benachbarte, nicht betroffene Federsegmente stattfindet. Eine Polsterplatte (50) weist mindestens einen Kanal (51) zur Aufnahme von mindestens einem Federelement auf. Ein Kanal (51) ist dabei durch erste, zweite annähernd parallele Grundflächen (14,24) und erste, zweite Paare von seitlichen Flankenflächen (15,25; 16,26) im Querschnitt annähernd wabenförmig begrenzt. Dies hat zur Folge, dass bei einem eingelegten Federelement die ersten, zweiten annähernd parallelen Auflageschenkel (40,41) der Federnsegmente (400) die ersten, zweiten Grundflächen (14,24) eines Kanals (1) abstützen, und die seitlichen Federschenkel (43,44; 47,48) der Federnsegmente (400) zur Bildung von beidseitigen Federungsräumen (30,31) eine größere Steilheit als die umliegenden Flankenflächen (15,25; 16,26) eines Kanals (51) aufweisen.

Fig. 1

**Beschreibung**

Die Erfindung betrifft ein Federelement, welches aus Federsegmenten aufgebaut ist. Die Erfindung betrifft weiterhin eine Polsterplatte, die mindestens einen Kanal zur Aufnahme von mindestens einem derartigen Federelement aufweist. Die Erfindung betrifft schließlich einen Matratzenkern, der zumindest eine derartige Polsterplatte enthält.

Federelemente zum Einsatz in Matratzenkernen sind in unterschiedlichen konstruktiven Gestaltungen und aus vielfältigen Materialien bekannt. Dabei müssen diese nicht nur entsprechende Federeigenschaften aufzuweisen, welche z.B. durch eine entsprechende Weichheit des Federmaterials eingestellt werden können. Darüber hinaus sollen Federelemente aber auch so robust sein, dass diese selbst bei einem unsachgemäßen Gebrauch einer Matratze nicht zerstört werden. Eine solche Situation liegt zum Beispiel dann vor, wenn eine Person nicht nur auf einer Matratze liegt, sondern darauf steigt. Hierbei wird punktuell über die Füße der Person eine so gro-βe Druckkraft auf einen sehr kleinen Bereich der Matratze ausgeübt, das sehr leicht die Gefahr einer dauerhaften Beschädigung von eingebetteten Federelementen besteht. Auch bei einem unsachgemäßen Transport einer Matratze, bei der diese z.B. übermäßig stark geknickt wird, können solche Beschädigungen auftreten.

So ist aus der DE 199 30 215 C2 ein Liege- und Sitzelement bekannt, das eine Vielzahl von einzelnen Federelementen aufweist. Diese sind z.B. ringförmig geschlossen und "Schulter an Schulter" anliegend linear in einer Reihe quer nebeneinander angeordnet. Eine auf ein Federelement ausgeübte Druckkraft wird somit auf benachbart anliegende Federelemente in dieser Reihe weitergeleitet. Bei einer weiteren Anordnung sind Federelemente durch die Schlaufen eines wellenförmigen Bandes gebildet. Dabei liegen die Wandungen der Schlaufen der Welle aneinander an, so dass eine auf eine Schlaufe ausgeübte Druckkraft auf die benachbarten, schlaufenförmigen Federelemente der Welle weitergeleitet wird. Es erfolgt also eine Verteilung einer z.B. durch den Körper einer Person ausgeübte Druckkraft in einer Längsrichtung auf die in Reihe benachbart anliegenden Federelemente.

Aus der DE 699 08 249 T2 ist eine Matratze mit interaktiven elastischen Elementen bekannt, die in Form von röhrenförmigen hohlen Polyedern ausgeführt sind. Diese Polyeder sind quer nebeneinander liegend miteinander zu einer Zeile verbunden. Auch bei dieser Anordnung breitet sich ein auf einen Polyeder in der Zeile ausgeübter Druck auf die benachbarten Polyeder aus und verursacht dort entsprechende Verformungen.

Aus der DE 100 23 466 A1 ist weiterhin eine Federvorrichtung bekannt, welche mindestens zwei nebeneinander angeordnete im wesentlichen ringförmige Biegefederelemente aufweist, deren Ringebenen in Federrichtung und zueinander parallel verlaufen und in Federrichtung gesehen in einem oberen bzw. unteren Ringabschnitt insbesondere einstückig miteinander verbunden sind. Vorzugsweise weisen die Biegefederelemente einen Abstand voneinander auf und sind im oberen bzw. untern Ringabschnitt über einen annähernd senkrecht zur Federrichtung verlaufenden Verbindungssteg miteinander verbunden.

Aus der DE 1 164 048 ist eine Randfederung für Federkerne bekannt. Diese besteht aus einer sechseckig gebogenen Drahtfeder, deren waagerechte Schenkel parallel zum oberen und unteren Federkernrahmen liegen und mit dem Rahmen verbunden sind. Die beweglichen Schenkel der Drahtfeder sind durch ringförmige Federwindungen verbunden. Die Federwindungen wiederum sind durch einen flachen Stab verbunden, wobei mindestens eine Verbindungsstelle längs der Achse des Flachstabes schiebbar geführt ist.

Aus der US 3,167,353 ist ein Gegenstand aus einem Kunststoffmaterial bekannt, der kleine Öffnungen aufweist, die eine netzartige Struktur bilden. In die Öffnungen sind verstärkende Streifen reihenartig derart eingezogen, dass sich abwechselnd nach oben und nach unten abgespreizte Kämme und Wannen ergeben. Gegenstände dieser Art können als durchlüftbare Abstandshalter für Sitze oder Kissen verwendet werden.

Aus der US 5,551,673 ist ein Stoßdämpfer aus Harz bekannt.

Bei Matratzen neuerer Bauart wird zunehmend auf den Einsatz von metallischen Bestandteilen verzichtet. Besonders bei Federsegmenten, die aus neuartigen elastischen und gegebenenfalls mit Verbundfasern verstärkten Kunststoffmaterialien bestehen, ist die Gefahr groß, dass diese beschädigt werden.

Dieses Problem kann auch dann auftreten, wenn die Härte einer Matratze aufgrund eines individuellen inneren Aufbaus und einer geeigneten Materialauswahl auf das Körpergewicht z. B. einer kleineren oder leichteren Person abgestimmt ist. Wird eine solche Matratze von einer Person benutzt, deren Körpergewicht das auf Grund der individuellen Konfektionierung der Matratze zulässige Gewicht überschreitet, so können auch bei normalem Gebrauch dauerhafte Beschädigungen insbesondere der Federn und Federelemente im Innerem auftreten.

Der Erfindung liegt die Aufgabe zu Grunde ein Federelement, eine Polsterplatte mit derartigen Federelementen und einen diesen aufweisenden Matratzenkern anzugeben, die einerseits die Einstellung individueller Matratzenhärten ermöglichen und andererseits robust sind gegenüber unzulässige hohe auf die Matratze bevorzugt punktuell einwirkende Druckkräfte.

Die Aufgabe wird gelöst mit dem im Anspruch 1 angegebenen Federelement, mit der im Anspruch 8 angegebenen Polsterplatte und mit dem Matratzenkern gemäß Anspruch 12. Vorteilhafte weitere Ausführungen sind in den Unteransprüchen angegeben.

Das erfindungsgemäße Federelement besteht aus Federsegmenten, welche erste und zweite annähernd parallele Auflageschenkel aufweisen, die über erste und zweite Paare an seitlichen Federschenkeln verbunden sind, und welche hintereinander liegend eine Spirale mit annähernd wabenartigem Querschnitt ergeben.

Ein spiralförmig gestrecktes Federelement mit Federsegmenten, welche eine wabenförmige Querschnittsgeometrie aufweisen, hat folgende Vorteile.

So ermöglichen die beiden parallelen Auflageschenkel zum einen eine großflächige Abstützung eines jeden Federsegments an benachbarten Flächen. Hierüber können Druckkräfte gezielt in ein einzelnes Federsegment des Federelements eingeleitet werden, so dass sich die Auflageschenkel und die dazwischen liegenden beiden Paare an seitlichen Federschenkeln parallel aufeinander zu oder voneinander weg bewegen. Die bei solchen Druckbeanspruchungen eines Federsegments auftretenden Verformungen können auf besonders vorteilhafte Weise durch ein entsprechend seitliches Ausweichen bei der Kompression der beiden seitlichen Federschenkel aufgenommen werden. Ein Federsegment ist somit besonders gut dazu geeignet, Druckkräfte aufzunehmen, welche annähernd orthogonal auf die parallelen Auflageschenkel ausgeübt werden. Da derartige Druckverhältnisse häufig im Inneren von Polsterplatten auftreten, sind derartige Federsegmente besonders geeignet zum Aufbau von Polsterplatten und daraus bestehenden Matratzenkernen.

Gemäß der Erfindung sind Federsegmente, deren Auflage- und seitliche Federschenkel erfindungsgemäß im Querschnitt annähernd wabenartig sind, besonders geeignet zum Aufbau von mehrgliedrigen, lang gestreckten Federelementen. Erfindungsgemäß sind die Federsegmente eines solchen Federelements hintereinander liegend entlang einer Längsachse angeordnet und endlos zu einer Spirale mit einem annähernd wabenartigen Querschnitt miteinander verbunden. Die ersten Auflageschenkel, die ersten Paare an seitlichen Federschenkel, die zweiten Auflageschenkel und die zweiten Paare an seitlichen Federschenkel eines jeden Federsegments sind also in einer Spirale endlos aneinander gereiht. Erfindungsgemäß weist die Spirale annähernd einen wabenartigen Querschnitt auf.

Spiralartige Federelemente mit annähernd wabenartigem Querschnitt können z.B. im Inneren einer Polsterplatte oder eines Matratzenkerns in parallel nebeneinander liegenden und z.B. in Längsrichtung oder in Querrichtung der Polsterplatte bzw. des Matratzenkerns bevorzugt über deren gesamte Breite oder Länge verlaufenden Kanälen eingelegt sein.

Eine gemäß der Erfindung gestaltete Polsterplatte weist somit zumindest einen, zur Aufnahme eines Federelementes dienenden Kanal auf. Dieser ist durch erste und zweite annähernd parallele Grundflächen, und ein erstes und zweites Paar an seitlichen Flankenflächen begrenzt. Der Querschnitt eines solchen Kanals ist ebenfalls annähernd wabenförmig und somit an die Aufnahme eines erfindungsgemäßen Federelementes angepasst. Dieses ist dabei erfindungsgemäß so in den Kanal eingelegt, dass die ersten und zweiten annähernd parallelen Auflageschenkel der Federsegmente die beiden annähernd parallelen Grundflächen im Inneren des Kanals abstützen. Vorteilhaft weisen die seitlichen Federschenkel der Federsegmente zur Bildung von beidseitigen Federungsräumen eine grö-ßere Steilheit auf als die umliegenden Flankenflächen des Kanals. Bei der Ausübung einer Druckbelastung auf die Polsterplatte werden Druckkräfte über die Grundflächen des Kanals auf die Auflageschenkel der Federsegmente ausgeübt. Bei der dabei auftretenden Verformung können die beiden Paare an seitlichen Federschenkeln der betroffenen Federsegmente in die beidseitigen Federungsräume des Kanals ausweichen.

Der Aufbau der Federelemente weist den besonderen Vorteil auf, dass von außen eingebrachte Druckkräfte im wesentlichen von den unmittelbar betroffenen Federsegmenten des spiralförmigen Federelements aufgenommen werden und keine Übertragung von Druckkräften innerhalb der Spirale auf benachbarte, nicht betroffene Federsegmente stattfindet.

Die Weite der Federungsräumen, die im Wesentlichen durch den Unterschied der Steilheiten der seitlichen Federschenkel der Federsegmente und der seitlichen Flankenflächen des Kanals bestimmt wird, ermöglicht somit ein normales Federungsverhalten der Polsterplatte. Besonders vorteilhaften wird hierdurch gemäß der Erfindung der ausnutzbare Federbereich beschränkt und damit die Gefahr einer Zerstörung des Federelementes und deren Federsegmenten erheblich reduziert. Wird nämlich in die Polsterplatte eine unzulässige hohe Druckkraft eingebracht, so werden die beiden Auflageschenkel bei den betroffenen Federsegmenten über deren parallelen Grundflächen des Kanals eingedrückt. Dabei weichen die seitlichen Federschenkel so stark seitlich aus, dass sie die beidseitigen Federungsräume komplett durchlaufen und sich an den Innenseiten der seitlichen Flankenflächen des Kanals abstützen. Eine unzulässig hohe Verformung des Federmaterials kann damit weit gehend vermieden werden.

Gemäß einer weiteren, besonders vorteilhaften Ausführung der Erfindung ist eine Polsterplatte so in einen ersten und zweiten Teil aufgeteilt, dass ein Kanal, der erfindungsgemäß einen annähernd wabenförmigen Querschnitt aufweist, in annähernd formgleiche obere und untere Einlagerinnen geteilt wird. Hierdurch wird die Montage einer Polsterplatte erleichtert. Es können dann im offenen Zustand die Einlagerinnen des einen Teils der Polsterplatte mit Federelementen bestückten werden. Die vollständige Polsterplatte entsteht in einem zweiten Arbeitsschritt, indem der zweite, annähernd formgleiche Teil kopfüber auf den mit den Federelementen ausgerüsteten ersten Teil aufgelegt wird.

Gemäß einer weiteren, besonders vorteilhaften Ausführung der Erfindung sind die Einlagerinnen in den beiden Teilen der Polsterplatte und der Abstand der Auflageschenkel der Federsegmente so aufeinander abgestimmt, dass im fertigen Zustand der Polsterplatte innen liegende Hohlräume auftreten. Erfindungsgemäß ist hierzu der Abstand der Auflageschenkel der Federsegmente in einem annähernd unbelasteten Zustand größer als der Abstand der Grundflächen in den Einlagerinnen, falls die beiden Teile der Polsterplatte direkt aufeinander liegen. Dies kann z.B. durch Vorgabe einer entsprechenden Steilheit der Federschenkel der Federsegmente eingestellt werden. Hierdurch werden die beiden Teile einer Polsterplatte im unbelasteten Zustand über die Federsegmente von eingelegten Federelementen auf Abstand gehalten. Es entstehen dabei innen liegende, flache Hohlräume zwischen den Kanälen.

Auch diese Ausführung hat den Vorteil, dass die Gefahr einer Zerstörung der Federelemente bei Auftreten einer unzulässig hohen äußeren Druckkraft vermieden werden kann. In einem solchen Falle stützen sich nämlich nicht nur die seitlichen Federschenkel der Federsegmente an den umliegenden Flankenflächen des Kanals ab, sondern es prallen die innen liegenden Flächen der beiden Teile der Polsterplatte so aufeinander, dass die Hohlräume vollständig eingedrückt werden. Demgegenüber werden die Hohlräume bei normaler Belastung der Polsterplatte nicht vollständig bis auf null zusammen gepresst. Da diese Ausführungsform einer Polsterplatte somit eine zusätzliche Sicherheit gegen Überlastung aufweist, kann die Härte der Federelemente genau auf das individuelle Körpergewicht einer bestimmten Person abgestimmt werden.

Gemäß der Erfindung ausgeführte Polsterplatten sind besonders als Bauteile zum Aufbau von Matratzenkernen geeignet. So können z.B. mehrere derartige Polsterplatten über- oder nebeneinander liegenden im Inneren eines Matratzenkerns angeordnet sein. Andererseits können in einer Matratze z.B. auch streifenweise Polsterplatten angeordnet sein, die mit Federelementen unterschiedlicher Härte ausgerüstet sind.

Die Erfindung und die damit verbundenen Vorteile werden an Hand der Beispiele in den kurz angeführten Figuren nachfolgend näher erläutert. Dabei zeigen

Fig. 1 eine Querschnittsdarstellung durch einen beispielhaften, gemäß der Erfindung gestalteten Kanal in einer z.B. zweiteiligen Polsterplatte und durch ein Federsegment eines in den Kanal eingelegten erfindungsgemäßen spiralartigen Federelements mit einem annähernd wabenartigen Querschnitt,

Fig. 2 eine dem Ausschnitt von Fig. 1 entsprechende Querschnittsdarstellung, wobei sich die Polsterplatte und das sichtbare Federsegment des Federelements in einem unbelasteten Zustand befinden,

Fig. 3 eine dem Ausschnitt von Fig. 1 entsprechende Querschnittsdarstellung, wobei sich die Polsterplatte und das sichtbare Federsegment des Federelements in einem belasteten Zustand befinden, und

Fig. 4 eine Draufsicht auf ein erfindungsgemäßes, spiralartiges Federelement aus mehreren Federsegmenten.

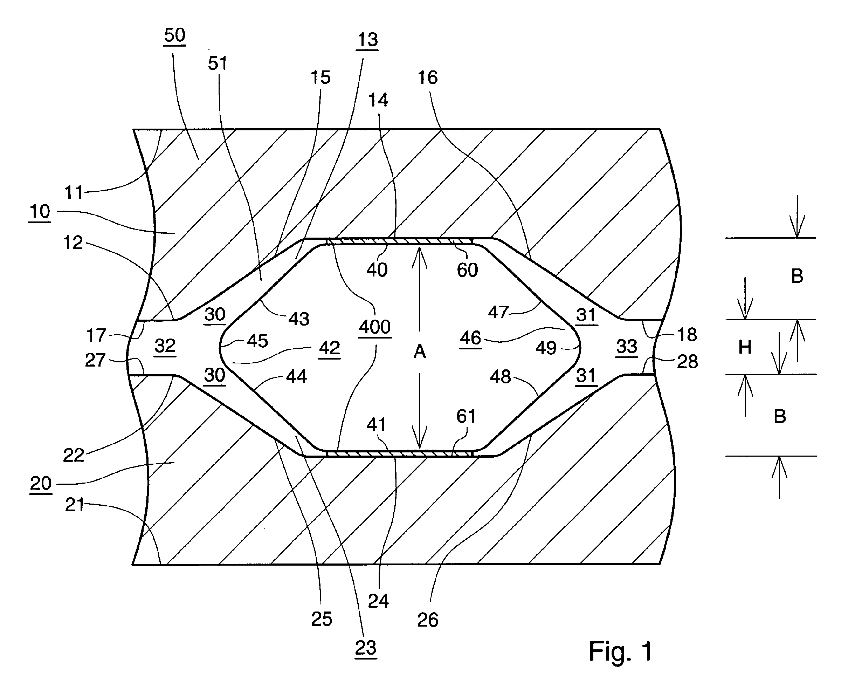

Figur 1 zeigt einen Querschnitt durch eine beispielhafte Polsterplatte 50. Dabei ist der dargestellte Ausschnitt so gewählt, dass dieser durch einen innen liegenden Kanal 51 und eines von mehreren hintereinander liegenden Federsegmenten eines eingelegten Federelements verläuft. Erfindungsgemäß weist das sichtbare Federsegment 400 einen ersten und zweiten Auflageschenkel 40, 41 auf, welche annähernd parallel zueinander verlaufen. Im Beispiel der Figur 1 sind die Auflageschenkel 40, 41 annähernd horizontal und im Kanal 51 oben bzw. unten liegend angeordnet. Sie sind weiterhin auf der linken Seite über einen ersten Federbereich 42 und auf der rechten Seite über einen zweiten Federbereich 46 miteinander verbunden. Der ersten Federbereich 42 besteht erfindungsgemäß aus einem ersten Paar an seitlichen Federschenkeln 43, 44. In entsprechender Weise verfügt der gegenüberliegend auf der rechten Seite befindliche zweite Federbereich 46 über ein zweites Paar an Federschenkeln 47, 48.

Erfindungsgemäß weisen die Schenkel des Federsegments 400 im Querschnitt eine annähernd wabenartige Struktur auf. Alle Federsegmente eines gestreckten Federelements liegen in der Zeichenebene von Figur 1 hintereinander und sind in der Art einer Spirale verbunden. In der zweidimensionalen Darstellung von Figur 1 kann naturgemäß nur der Querschnitt durch annähernd ein Federsegment gezeigt werden.

Erfindungsgemäß weist das Federsegment 400 einen annähernd wabenartigen Querschnitt auf. Im Falle der Ausübung einer Druckkraft auf die Ober- bzw. Unterseiten 11, 21 der Polsterplatte 50 werden die Auflageschenkel 40, 41 annähernd parallel aufeinander zu bewegt, und dabei die Höhe A des Federsegments 400 reduziert. Die beiden Federbereich 42, 46 wirken dabei über deren Paare an seitlichen Federschenkeln 43, 44 und 47, 48 dieser Verformung entgegen. Gemäß einer vorteilhaften, in Figur 1 bereits dargestellten Ausführung sind die Übergangsbereiche zwischen den Federschenkeln der Paare in den rechten und linken Ecken der Wabenstruktur vorteilhaft als Torsionsbögen ausgeführt. So sind die Federschenkel 43, 44 des linken Paares über einen ersten Torsionsbogen 45 und die Federschenkel 47, 48 des zweiten Paares über einen zweiten Torsionsbogen 49 biegeelastisch verbunden. Bei einer Stauchung des Federsegments 400 weichen somit die Spitzen der Federbereiche 42, 46 insbesondere im Bereich von deren Torsionsbögen 45, 49 nach links und rechts aus.

Erfindungsgemäß weist der Kanal 51 in der Polsterplatte 50 ebenfalls einen annähernd wabenartigen Querschnitt auf. Dabei ruhen deren obere und untere ebenfalls annähernd parallle Grundflächen 14,24 direkt auf den abstützenden Auflageschenkeln 40,41 des innen liegenden Federsegments 400.

Der Kanal 51 ist auf der linken Seite begrenzt durch ein erstes Paar an Flankenflächen 15, 25. Entsprechend begrenzen auf der rechten Seite ein zweites Paar an Flankenflächen 16, 26 den Kanal 51. Erfindungsgemäß weisen die seitlichen Federschenkel 43, 44 und 47, 48 jeweils eine größere Steilheit als die umliegenden Flankenflächen 15, 25 und 16, 26 des Kanals auf. Bei dem in Figur 1 gezeigten, annähernd unbelasteten Zustand der Polsterplatte 50 ergeben sich dabei erfindungsgemäß zwischen den Federschenkeln des Federsegments und den Flankenflächen des Kanals Federungsräume 30, 31. Bei einer Druckbelastung der Polsterplatte kann somit der linke Federbereich 42 des Federsegments 400 in den Federungsraum 30 und der rechte Federbereich 46 in den rechten Federungsraum 31 ausweichen. Innerhalb der Federungsräume ist eine ungehinderte Verformung des Federsegments 400 möglich, in dem deren Wabenstruktur gestaucht bzw. eingedrückt wird.

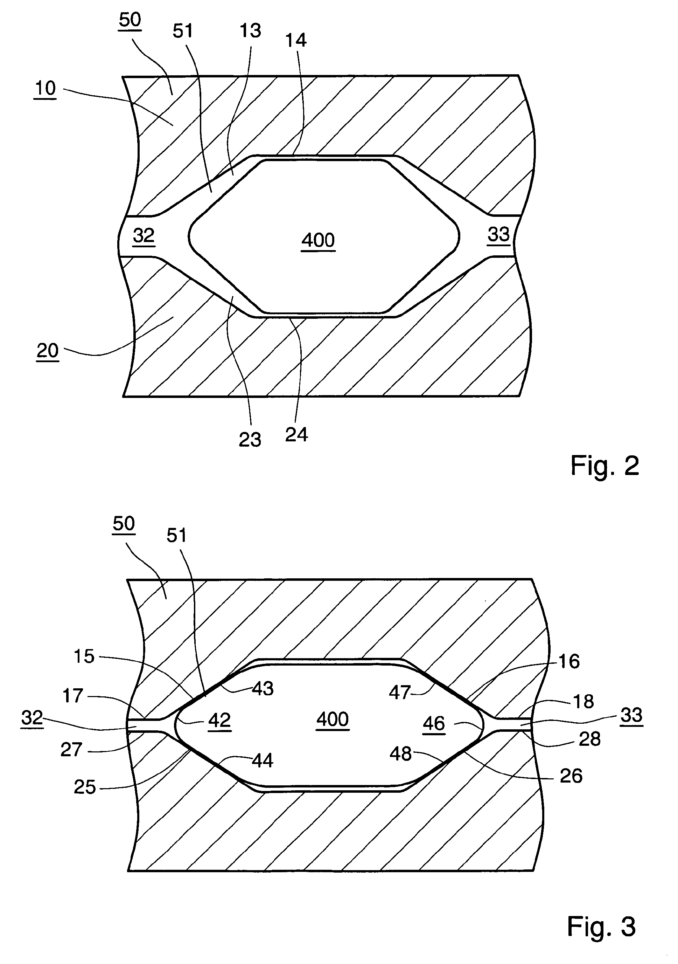

Dies ist an den in den Figuren 2 und 3 dargestellten Zuständen veranschaulicht. Dabei zeigt Figur 2 die Polsterplatte 50 und das sichtbare Federsegment 400 des Federelements in einem unbelasteten Ruhezustand, während Figur 3 die Polsterplatte in einem belasteten und das Federsegment 400 in einem gestauchten Zustand darstellt. Zustände, welche zwischen den in den Figuren 2, 3 dargestellten Zuständen liegen, treten bei einer üblichen Belastung der Polsterplatte im normalen Gebrauch auf. Hierbei wird die außen z.B. von einer Person spürbare Härte der Polsterplatte, d.h. die von der Polsterplatte ausgeübte Rückstellkraft, im Wesentlichen durch die Härte der Federsegmente des Federelements bestimmt.

Wird auf die Polsterplatte 50 eine besonders starke Druckkraft ausgeübt, dann weichen die Federbereiche 42, 46 so stark nach links und rechts aus, dass die Federungsräume 30, 31 vollständig durchlaufen werden. Dieser Zustand ist annähernd im Beispiel der Figur 3 dargestellt. Die seitlichen Federschenkel 43, 44 des linken Federbereiches 42 liegen dann direkt auf den Flankenflächen 15, 25 auf. In der gleichen Weise liegen die Federschenkel 47, 48 des rechten Federbereiches 46 auf den rechten Flankenflächen 16, 26 des Kanals 51 auf. Das Federsegment 400 wird in diesem Zustand nahezu vollständig von den Innenseiten des Kanals 51 umschlossen. Selbst bei einer weiteren Erhöhung der äußeren Druckkraft ist eine mögliche weitere Verformbarkeit des Federsegments somit erheblich eingeschränkt. Die Federsegmente des spiralförmigen Federelements sind auf diese Weise gegen unzulässige Verformungen so geschützt, dass eine Beschädigung vermieden werden kann.

Jede weitere Erhöhung der Druckkraft auf die Polsterplatte 50 wird nun im Wesentlichen durch die innere Verformbarkeit des Materials der Polsterplatte 50 aufgefangen. Da diese in der Regel kleiner ist als die Elastizität der Federsegmente, wird eine u.U. wesentlich größere Rückstellkraft hervorgerufen. Wird die Druckkraft beispielsweise von einer Person aufgebracht, so stellt sich bei dieser der Eindruck ein, dass bei einer sehr starken Belastung der Polsterplatte deren Härte sprungartig zunimmt. Es ist somit unter Umständen sogar möglich, eine erfindungsgemäße Polsterplatte punktuell stark zu belasten, z.B. durch Betreten, ohne dass dauerhafte Beschädigungen eines innen liegenden Federelements und deren Federsegmente zu befürchten sind.

Gemäß einer weiteren, im Beispiel der Figur 1 bereits dargestellten Ausführung ist die Polsterplatte 50 in einen ersten und zweiten, d.h. in Figur 1 einen oberen und unteren Teil 10, 20 aufgeteilt. Ist die Polsterplatte z.B. als eine Schaumplatte ausgeführt, so kann die Trennung durch einen möglichst symmetrisch in der Mitte verlaufenden Schaumschnitt erfolgen. Der Kanal wird dann durch eine erste, in Figur 1 obere Einlagerinne 13 und eine zweite, in Figur 1 untere Einlagerinne 23 gebildet. Auch diese können durch Schnitte bebildet werden. Die oberen und unteren Grundflächen 14, 24 stellen dabei den jeweiligen Rinnengrund dar. Weiterhin bilden die ersten und dritten Flankenflächen 15, 16 die schrägen Rinnenflanken der oberen Einlagerinne 13, und die zweiten und vierten Flankenflächen 25, 26 die schrägen Rinnenflanken der unteren Einlagerinne 23. Werden die beiden Teile 10, 20 der Polsterplatte 51 über deren Innenseiten 12, 22 übereinander gelegt, so ergänzen sich die beiden zugewandten Einlagerinnen 13, 23 zum kompletten Kanal 51. Dieser weist dann den gewünschten, annähernd wabenförmigen Querschnitt auf.

Vorteilhaft sind die Federsegmente eines Federelements über zusätzliche, längs z.B. auf der Außenseite verlaufende Verbindungsmittel verbindbar. Im Beispiel der Figuren 1 sind derartige Verbindungsmittel bereits im Schnitt schraffiert dargestellt. Dabei verbindet ein erstes, vorzugsweise bandförmiges Verbindungsmittel 60 die ersten Auflageschenkel 40 von hintereinander liegenden Federsegmenten. Dieses Verbindungsmittel 60 kann zum Beispiel in Form eines flexiblen Streifens oder einer Filzbahn ausgeführt und mit den oberen Auflageschenkeln 40 verklebt sein. Bei Bedarf können zusätzlich auch die unteren Auflageschenkel 41 der Federsegmente des Federelementes über ein entsprechendes bahnartiges Verbindungsmittel 61 miteinander verbunden sein. Hierdurch wird der Verbund der Federsegmente im Federelement stabilisiert und insbesondere die Montage bei Einlegen in eine Einlagerinne 13, 23 erheblich erleichtert.

Bei einer weiteren, besonders vorteilhaften und in den Figuren 1 bis 3 ebenfalls bereits dargestellten Ausführungsform der Erfindung sind innen liegende Hohlräume 32, 33 zwischen den Innenseiten 12, 22 der beiden Teile 10, 20 der Polsterplatte 50 gebildet. Hierzu ist der Abstand A der Auflageschenkel 40, 41 eines Federsegments 400 im annähernd unbelasteten Zustand größer als die Tiefe B der Einlagerinnen 13, 23. Der Abstand A ist also größer als der Abstand 2xB der Grundflächen 14, 24 in den Einlagerinnen 13, 23, falls die beiden Teile 10, 20 der Polsterplatte direkt aufeinander liegen. Dies hat zur Folge, dass sich Hohlräume 32, 33 mit einer Querschnittshöhe von etwa H ergeben. Diese Höhenverhältnisse sind auf der rechten Seite von Fig. 1 durch entsprechende Abstandslinien anschaulich gemacht.

Dabei gilt

$$A > 2B \quad \text{und} \quad H \approx A - 2B .$$

Die Hohlräume 32, 33 dienen als zusätzliche Verdichtungsräume im Falle einer sehr starken Belastung der Polsterplatte 50. Wie am Beispiel der Figur 3 zu ersehen ist, werden diese Hohlräume bei normaler Belastung der Polsterplatte nicht vollständig bis auf null zusammen gedrückt, auch wenn das Federsegment 400 bereits seine maximale mögliche Stauchung angenommen und die Federungsräume 30, 31 im Kanal 51 vollständig durchlaufen hat.

Nur im Falle einer unzulässig überhöhten Druckbelastung der Polsterplatte können die Hohlräume 32, 33 kurzfristig vollständig eingedrückt werden. In diesem Falle liegen die linken und rechten Rinnenschultern 17, 18 der Innenseite 12 des ersten Teiles 10 der Polsterplatte auf den gegenüberliegenden linken und rechten Rinnenschultern 27, 28 der Innenseite des zweiten Teiles 20 der Polsterplatte auf. Durch diesen Vorgang wird in der Art eines Höhenanschlags die Stauchbarkeit der Polsterplatte in einer nahezu absoluten Weise begrenzt. In diesem Zustand wirkt einer möglichen weiteren Erhöhung von äußeren Druckkräften die innere Zähigkeit des Materials der beiden Teile 10, 20 der Polsterplatte entgegen.

Diese Ausführung eignet sich auch besonders dafür, extra weiche, z.B. für kleine bzw. leichte Personen geeignete Matratzen aufzubauen. Dabei kann die Weichheit insbesondere durch eine entsprechende Auswahl des Materials der Federelemente erzielt werden. Dennoch sind diese in der oben beschriebenen Weise bei Auftreten einer unzulässig hohen Belastung gegen eine Beschädigung geschützt.

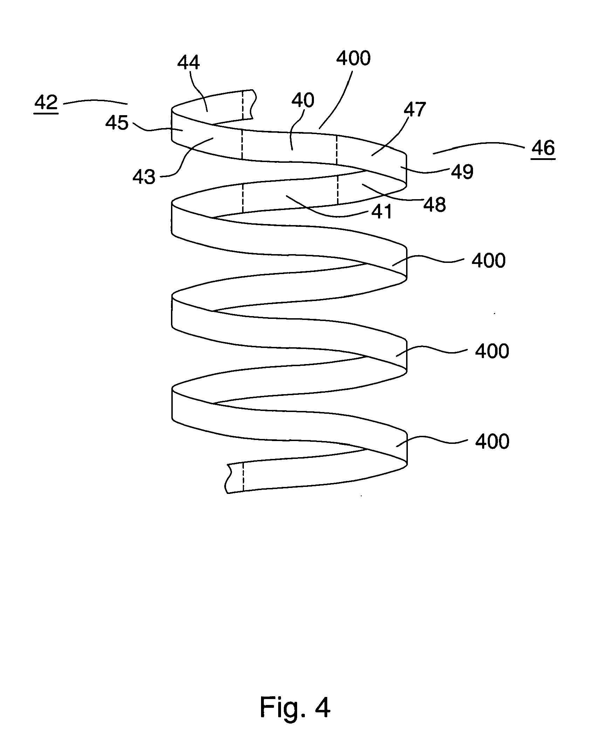

Fig. 4 zeigt schließlich eine Draufsicht auf einen Ausschnitt eines spiralförmigen Federelements, welches aus einer Vielzahl von Federsegmenten 400 besteht.

**Patentansprüche**

1. Federelement aus Federsegmenten (400), welche erste und zweite annähernd parallele Auflageschenkel (40,41) aufweisen, die über erste und zweite Paare an seitlichen Federschenkeln (43,44; 47,48) verbunden sind, und welche hintereinander liegend eine Spirale mit annähernd wabenartigem Querschnitt ergeben.

2. Federelement nach Anspruch 1, wobei die seitlichen Federschenkel eines Paares (43,44; 47,48) eines Federsegments (400) über einen Torsionsbogen (45;49) biegeelastisch miteinander verbunden sind.

3. Federelement nach Anspruch 1 oder 2, wobei die Federsegmente (400) aus einem elastischen, insbesondere bandförmigen Kunststoffmaterial bestehen.

4. Federelement nach Anspruch 3, mit Verbundfasern im Kunststoffmaterial als Verstärkung.

5. Federelement nach einem der vorangegangenen Ansprüche, mit ersten und/oder zweiten längs verlaufenden Verbindungsmitteln (60,61) für die Federsegmente (400).

6. Federelement nach Anspruch 5, wobei die Verbindungsmittel (60,61) die ersten und/oder zweiten Auflageschenkel (40;41) der Federsegmente (400) verbinden.

7. Federelement nach Anspruch 5 oder 6, mit flexiblen Streifen als Verbindungsmittel (60,61), insbesondere Filzbahnen.

8. Polsterplatte (50) mit mindestens einem Kanal (51) und einem darin befindlichen Federelement nach einem der vorangegangen Ansprüchen, wobei

   a) ein Kanal (51) durch erste, zweite annähernd parallele Grundflächen (14,24) und erste, zweite Paare von seitlichen Flankenflächen (15,25; 16,26) im Querschnitt annähernd wabenförmig begrenzt ist,
   b) die ersten, zweiten annähernd parallelen Auflageschenkel (40,41) der Federsegmente (400) des Federelements die ersten, zweiten Grundflächen (14,24) eines Kanals (51) abstützen, und
   c) die seitlichen Federschenkel (43,44; 47,48) der Federsegmente (400) des Federelements zur Bildung von beidseitigen Federungsräumen (30,31) eine größere Steilheit als die umliegenden Flankenflächen (15,25; 16,26) des Kanals (51) aufweisen.

9. Polsterplatte nach Anspruch 8, welche so aus einem ersten und zweiten Teil (10,20) gebildet ist, dass ein Kanal (51) in annähernd formgleiche obere und untere Einlagerinnen (13,23) im ersten und zweiten Teil (10,20) aufgeteilt ist.

10. Polsterplatte nach Anspruch 9, wobei zur Bildung von innen liegenden Hohlräumen (32,33) zwischen den beiden Teilen (10,20) der Polsterplatte der Abstand (A) der Auflageschenkel (40,41) eines Federsegments (400) in einem annähernd unbelasteten Zustand des Federelements größer ist als der Abstand (2B) der Grundflächen (14,24) in den Einlagerinnen (13,23) der beiden Teile (10,20) der Polsterplatte.

11. Polsterplatte nach einem der vorangegangenen Ansprüche, wobei sich der mindestens eine Kanal (51) über deren gesamte Breite oder Länge erstreckt.

12. Matratzenkern mit zumindest einer Polsterplatte (50) nach einem der Ansprüche 8 bis 11.

13. Matratzenkern nach Anspruch 12 aus Polsterplatten (50), welche mit Federelementen unterschiedlicher Härte ausgestattet sind.

Fig. 1

EP 1 785 072 A1

Fig. 2

Fig. 3

Fig. 4

**Europäisches Patentamt**

**EUROPÄISCHER RECHERCHENBERICHT**

Nummer der Anmeldung

EP 06 01 0984

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 246 962 A (MUZZI PLASTICOS LTD [BR]) 19. Februar 1992 (1992-02-19) * Seite 4, Zeile 7 - Zeile 16; Abbildungen 5,6 * | 1-3 | INV. A47C27/20 A47C27/06 A47C27/14 |
| X | US 4 838 528 A (HAGEMEISTER ROBERT C [US]) 13. Juni 1989 (1989-06-13) * Spalte 1, Zeile 56 - Spalte 2, Zeile 26; Abbildungen 1-6 * | 1,2,5,6 | |
| X | US 5 401 007 A (DABNEY UPTON R [US] ET AL) 28. März 1995 (1995-03-28) * Spalte 2, Zeile 38 - Spalte 5, Zeile 24; Abbildungen 1-11 * | 1,2,5,6 | |
| X | US 1 349 079 A (MARKHAM SIDNEY L) 10. August 1920 (1920-08-10) * Abbildungen 10,11 * | 1,2 | |
| X | EP 0 357 941 A2 (TELECTRONICS NV [NL] TELECTRONICS NV [AN]) 14. März 1990 (1990-03-14) * Spalte 8, Zeile 23 - Zeile 30; Abbildungen 4,9 * | 1,2 | RECHERCHIERTE SACHGEBIETE (IPC) A47C F16F B29C |
| X | US 6 192 893 B1 (KATSUMATA YOSHINORI [JP]) 27. Februar 2001 (2001-02-27) * Spalte 1, Zeile 66 - Spalte 2, Zeile 29; Abbildungen 1,2 * | 1,2 | |
| X | FR 2 816 453 A1 (CARRIER KHEOPS BAC [FR]) 10. Mai 2002 (2002-05-10) * Abbildung 3 * | 1,2 | |
| A | DE 102 28 406 A1 (SCHEURING BERNHARD [DE]) 2. Januar 2003 (2003-01-02) * Absatz [0055] - Absatz [0094]; Abbildungen 1-12 * | 3-7 | |

-/--

Der vorliegende Recherchenbericht wurde für alle Patentansprüche erstellt

| Recherchenort | Abschlußdatum der Recherche | Prüfer |
|---|---|---|
| Den Haag | 23. Februar 2007 | Kus, Slawomir |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

## EUROPÄISCHER RECHERCHENBERICHT

Nummer der Anmeldung

EP 06 01 0984

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 285 607 A1 (KUTSCHI FRANZ ING [AT]) 26. Februar 2003 (2003-02-26) * Absatz [0015] - Absatz [0020]; Abbildungen 1-6 * ----- | 8,11,12 | |
| A | US 182 797 A (J. L. BRANSON & A. JUERGENS) 3. Oktober 1876 (1876-10-03) * das ganze Dokument * ----- | 1,2,5-7 | |
| A | JP 63 152736 A (KOKI PLAST KOGYO KK) 25. Juni 1988 (1988-06-25) * Zusammenfassung; Abbildungen * ----- | 1-4 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 23. Februar 2007 | Kus, Slawomir |

EPO FORM 1503 03.82 (P04C03)

EP 1 785 072 A1

ANHANG ZUM EUROPÄISCHEN RECHERCHENBERICHT
ÜBER DIE EUROPÄISCHE PATENTANMELDUNG NR.

EP 06 01 0984

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-02-2007

| Im Recherchenbericht angeführtes Patentdokument | | Datum der Veröffentlichung | Mitglied(er) der Patentfamilie | | Datum der Veröffentlichung |
|---|---|---|---|---|---|
| GB 2246962 | A | 19-02-1992 | BR<br>DE<br>FR<br>IT<br>PT | 7001605 U<br>4127226 A1<br>2665840 A1<br>224047 Z2<br>8329 U | 08-10-1991<br>02-04-1992<br>21-02-1992<br>23-11-1995<br>29-05-1992 |
| US 4838528 | A | 13-06-1989 | KEINE | | |
| US 5401007 | A | 28-03-1995 | CA | 2141088 A1 | 03-11-1995 |
| US 1349079 | A | 10-08-1920 | KEINE | | |
| EP 0357941 | A2 | 14-03-1990 | DE<br>DE<br>US | 68915655 D1<br>68915655 T2<br>4966564 A | 07-07-1994<br>15-09-1994<br>30-10-1990 |
| US 6192893 | B1 | 27-02-2001 | JP<br>JP | 3261112 B2<br>2001029118 A | 25-02-2002<br>06-02-2001 |
| FR 2816453 | A1 | 10-05-2002 | KEINE | | |
| DE 10228406 | A1 | 02-01-2003 | KEINE | | |
| EP 1285607 | A1 | 26-02-2003 | KEINE | | |
| US 182797 | A | | KEINE | | |
| JP 63152736 | A | 25-06-1988 | KEINE | | |

EPO FORM P0461

Für nähere Einzelheiten zu diesem Anhang : siehe Amtsblatt des Europäischen Patentamts, Nr.12/82

13

**EP 1 785 072 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19930215 C2
- DE 69908249 T2
- DE 10023466 A1
- DE 1164048
- US 3167353 A
- US 5551673 A